# EUROPEAN PATENT APPLICATION

(11) **EP 3 026 535 A1**
(43) Date of publication of application: **01.06.2016**
(21) Application number: 14846812.7
(22) Date of filing: 14.07.2014
(51) Int. Cl.: G06F 3/042, G02B 6/122

(54) **ELECTRONIC UNDERLAY**

(30) Priority: 27.09.2013 JP 2013201844; 15.05.2014 JP 2014101370
(71) Applicant: Nitto Denko Corporation, Ibaraki-shi, Osaka 567-8680 (JP)
(72) Inventor: SHIMIZU Yusuke, Ibaraki-shi Osaka 567-8680 (JP); YOSHIOKA Ryoma, Ibaraki-shi Osaka 567-8680 (JP)
(74) Representative: Hoffmann Eitle
(86) International application number: PCT/JP2014/068666
(87) International publication number: WO 2015/045572

(57) **Abstract**

There is provided an electronic underlay capable of precisely sensing a position pressed with the tip of a writing implement even at a low writing pressure. The electronic underlay includes an optical waveguide W including: an under cladding layer 1; cores 2 buried in the under cladding layer 1 so that the top surface of the cores 2 is flush with the surface of the under cladding layer 1; and an over cladding layer 3 formed to cover the under cladding layer 1 and the cores 2. The over cladding layer 3 has a surface serving as a surface for placement of a paper sheet thereon. The over cladding layer 3 has a thickness in the range of 1 to 100 µm and an elasticity modulus in the range of 0.1 MPa to 10 GPa. The cores 2 have a thickness in the range of 10 to 100 µm and an elasticity modulus in the range of 1 to 10 GPa.

## Description

### TECHNICAL FIELD

The present invention relates to an electronic underlay laid under a paper sheet on which writing is performed with a writing implement and for optically sensing a position at which a surface of the paper sheet is pressed with a tip of the writing implement.

### BACKGROUND ART

An input device having a pressure-sensitive touch panel and a display has been hitherto proposed as an input device for inputting characters and the like (see PTL 1, for example). This input device is configured such that, when a paper sheet is placed on the pressure-sensitive touch panel and a character or the like is written on the paper sheet with a writing implement (such as a pen), the pressure-sensitive touch panel senses the position pressed with the tip (such as a pen tip) of the writing implement to output the pressed position to the display, so that the inputted character or the like appears on the display.

A position sensor for optically sensing a pressed position has been proposed (see PTL 2, for example). This position sensor includes an optical waveguide in a sheet form including a plurality of cores serving as optical paths and arranged in vertical and horizontal directions, and a cladding covering peripheral edge portions of the cores. The position sensor is configured such that light from a light-emitting element is incident on one end surface of the cores and such that the light propagating in the cores is received by a light-receiving element at the other end surface of the cores. When part of the surface of the optical waveguide in the sheet form is pressed with a finger and the like, some of the cores corresponding to the pressed part are crushed (decreased in cross-sectional area thereof as seen in the pressed direction). The level of light received by the light-receiving element is decreased in the cores corresponding to the pressed part, so that the pressed position is sensed.

### RELATED ART DOCUMENT

### PATENT DOCUMENTS

PTL 1: JP-A-2006-172230
PTL 2: JP-A-HEI8(1996)-234895

### SUMMARY OF INVENTION

The present inventors have produced an electronic underlay such that the pressure-sensitive touch panel in PTL 1 is replaced with the position sensor including the optical waveguide in PTL 2. In the electronic underlay, when a paper sheet is placed on a surface of the cladding of the optical waveguide and a character or the like is written on the paper sheet with a writing implement, some of the cores corresponding to the pressed part are crushed by the pressing with the tip of the writing implement. The level of light received by the light-receiving element is decreased in the cores corresponding to the pressed part, so that the position pressed with the tip of the writing implement is detected.

However, the electronic underlay has a tendency to have difficulties in precisely sensing the position pressed with the tip of the writing implement when the writing pressure (pressing force exerted by the tip of the writing implement) is low.

In view of the foregoing, it is therefore an object of the present invention to provide an electronic underlay capable of sensing a position pressed with the tip of a writing implement even at a low writing pressure.

To accomplish the aforementioned object, an electronic underlay according to the present invention comprises: an optical waveguide in a sheet form including a first cladding layer in a sheet form, a second cladding layer in a sheet form, and a plurality of linear cores arranged in a lattice form, the cores being held between the first and second cladding layers; a light-emitting element connected to one end surface of the cores of the optical waveguide; and a light-receiving element connected to the other end surface of the cores, the optical waveguide being used under a paper sheet on which writing is performed with a writing implement, the second cladding layer having a surface serving as a surface for placement of the paper sheet thereon, the optical waveguide being configured such that the cores having a thickness in the range of 10 to 100 µm and an elasticity modulus in the range of 1 to 10 GPa are buried in a surface part of the first cladding layer so that the top surface of the cores is flush with the surface of the first cladding layer, and such that the second cladding layer having a thickness in the range of 1 to 100 µm and an elasticity modulus in the range of 0.1 MPa to 10 GPa is formed so as to cover the surface of the first cladding layer and the top surface of the cores, wherein light emitted from the light-emitting element passes through the cores of the optical waveguide and is received by the light-receiving element, wherein a surface part of the paper sheet corresponding to part of the linear cores arranged in the lattice form of the optical waveguide serves as an input region, and wherein a movement locus of the tip of the writing implement in the input region is specified, based on the amount of light propagating in the cores which is changed by the movement of the tip of the writing implement.

The present inventors have made studies on the structure of the optical waveguide to achieve the precise sensing of the position pressed with the tip of the writing implement even at a low writing pressure when a paper sheet is placed on the surface of the cladding layer of the optical waveguide in a sheet form for sensing the pressed position and a character or the like is written on the paper sheet with the writing implement such as a pen. In the course of the studies, the present inventors have found out that a cause of failure to sense the position pressed with the tip of the writing implement at the low writing pressure lies in the fact that part of the cladding layer positioned above the cores is thick (exceeding 100 µm). In view of the findings, the present inventors have hit upon the idea of decreasing the thickness of the part of the cladding layer positioned above the cores, and have made further studies. In the course of the studies, the present inventors have found out that thicker cores cause a greater amount of light to leak from part of the cores deformed by pressing, so that the pressed position is sensed easily. Also, the present inventors have found out that the pressed position is sensed more easily when the optical waveguide is used after the up/down orientation of the optical waveguide is inverted from the conventional up/down orientation.

In typical optical waveguide production, the cores in a protruding shape are formed on the surface of the second cladding layer, and thereafter the first cladding layer is formed to cover the cores. It is common technical practice to use the optical waveguide in the same up/down orientation as produced. That is, a paper sheet is placed on the surface of the first cladding layer while the second cladding layer is positioned on the bottom side and the first cladding layer is positioned on the top side of the optical waveguide. The present inventors have broken the bounds of the common technical practice, that is, have inverted the optical waveguide as produced so that the second cladding layer (over-cladding layer) is positioned on the top side and the first cladding layer (under-cladding layer) is positioned on the bottom side. As a result of further studies on the characteristics of the second cladding layer (over-cladding layer) and the cores, the present inventors have found that the position pressed with the tip of the writing implement is sensed even at a low writing pressure when the second cladding layer (over-cladding layer) has a thickness in the range of 1 to 100 µm and an elasticity modulus in the range of 0.1 MPa to 10 GPa, and the cores have a thickness in the range of 10 to 100 µm and an elasticity modulus in the range of 1 to 10 GPa. Hence, the present inventors have attained the present invention.

In the electronic underlay according to the present invention, the optical waveguide on which a paper sheet is placed is configured such that the cores having a thickness in the range of 10 to 100 µm and an elasticity modulus in the range of 1 to 10 GPa are buried in the first cladding layer so that the top surface of the cores is flush with the surface of the first cladding layer, and such that the second cladding layer having a thickness in the range of 1 to 100 µm and an elasticity modulus in the range of 0.1 MPa to 10 GPa is formed so as to cover the surface of the first cladding layer and the top surface of the cores. That is, with the optical waveguide having a specific structure, the second cladding layer positioned above the cores is properly thin, and the cores are properly thick. In addition, the second cladding layer and the cores have the proper elasticity moduli. Thus, even when the writing pressure is low during the writing of a character and the like on a paper sheet placed on the surface of the second cladding layer with a writing implement, the electronic underlay according to the present invention is capable of precisely detecting the pressed position because the amount of light propagating in the cores corresponding to the part pressed with the tip of the writing implement is easily decreased by a combination of the structure of the optical waveguide, the characteristics of the second cladding layer and the characteristics of the cores.

When the electronic underlay further comprises a protective layer provided on the surface of the second cladding layer and having a surface serving as a surface for placement of the paper sheet thereon, wherein a laminate comprised of the second cladding layer and the protective layer has a thickness in the range of 1 to 100 µm and an elasticity modulus in the range of 0.1 MPa to 10 GPa, the electronic underlay is capable of more precisely sensing the position pressed with the tip of the writing implement while the protective layer protects the thin second cladding layer.

### BRIEF DESCRIPTION OF DRAWINGS

[FIG. 1] FIG. 1A is a plan view schematically showing one embodiment of an electronic underlay according to the present invention, and FIG. 1B is an enlarged sectional view thereof.
[FIG. 2] FIG. 2 is an enlarged sectional view schematically showing the electronic underlay when in use.
[FIG. 3] FIGS. 3A to 3D are illustrations schematically showing a method of manufacturing an optical waveguide constituting the electronic underlay.
[FIG. 4] FIG. 4A is a plan view schematically showing another embodiment of the electronic underlay according to the present invention, and FIG. 4B is an enlarged sectional view thereof.
[FIG. 5] FIG. 5 is an enlarged sectional view schematically showing a modification of the electronic underlay.
[FIG. 6] FIGS. 6A to 6F are enlarged plan views schematically showing configurations of intersection of cores in a lattice form in the electronic underlay.
[FIG. 7] FIGS. 7A and 7B are enlarged plan views schematically showing paths of light at intersections of the linear cores in the lattice form.

### DESCRIPTION OF EMBODIMENTS

Next, embodiments according to the present invention will now be described in detail with reference to the drawings.

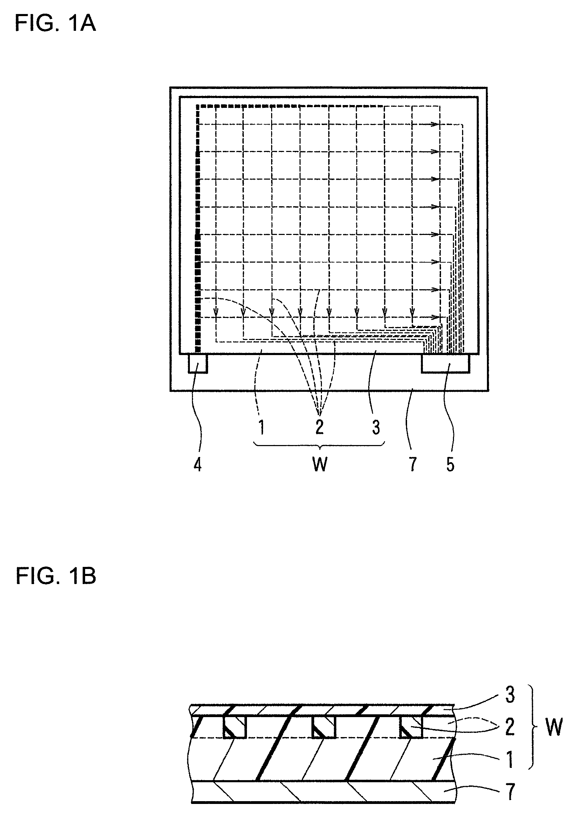

FIG. 1A is a plan view showing one embodiment of an electronic underlay according to the present invention. FIG. 1B is a sectional view, on an enlarged scale, of a middle portion of the electronic underlay. The electronic underlay according to this embodiment includes an optical waveguide W in a sheet form on which a paper sheet is placed. The optical waveguide W includes an under cladding layer (first cladding layer) 1 in a sheet form, linear cores 2 arranged in a lattice form buried in a front surface part of the under cladding layer 1 so that the top surface of the cores 2 is flush with the front surface of the under cladding layer 1, and an over cladding layer (second cladding layer) 3 in a sheet form having a uniform thickness while covering the front surface of the under cladding layer 1 and the top surface of the cores 2. The over cladding layer 3 has a surface serving as a surface for placement of the paper sheet thereon. The over cladding layer 3 has a thickness in the range of 1 to 100 µm and an elasticity modulus in the range of 0.1 MPa to 10 GPa. The cores 2 have a thickness in the range of 10 to 100 µm and an elasticity modulus in the range of 1 to 10 GPa. In this manner, a significant feature of the present invention lies in that the characteristics of the over cladding layer 3 positioned above the cores 2 are in the aforementioned ranges and the characteristics of the cores 2 are in the aforementioned ranges while the optical waveguide W on which the paper sheet is placed has the aforementioned specific structure. In this embodiment, the under cladding layer 1 has a thickness in the range of 20 to 2000 µm and an elasticity modulus in the range of 0.1 MPa to 1 GPa.

The electronic underlay further includes a light-emitting element 4 connected to one end surface of the linear cores 2 arranged in the lattice form, and a light-receiving element 5 connected to the other end surface of the linear cores 2. Light emitted from the light-emitting element 4 passes through the cores 2 and is received by the light-receiving element 5. The optical waveguide W, the light-emitting element 4, and the light-receiving element 5 are provided on a surface of a rigid plate 7 such as a resin plate and a metal plate in this embodiment. In FIG. 1A, the cores 2 are indicated by broken lines, and the thickness of the broken lines indicates the thickness of the cores 2. Also, in FIG. 1A, the number of cores 2 are shown as abbreviated. Arrows in FIG. 1A indicate the directions in which light travels.

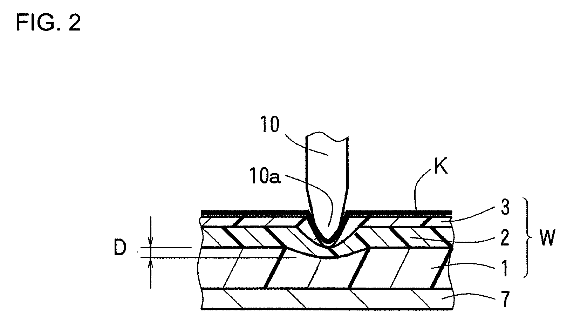

The electronic underlay is used under a paper sheet K on which a note or the like is written with a writing implement 10, as shown in sectional view in FIG. 2. At this time, the surface of the over cladding layer 3 of the optical waveguide W of the electronic underlay serves as a contact surface with the paper sheet K. The input of the note or the like is performed by writing the note or the like on a surface of the paper sheet K with the writing implement 10. An input region in the paper sheet K is part of the optical waveguide W of the electronic underlay corresponding to the linear cores 2 arranged in the lattice form (with reference to FIG. 1A).

Specifically, when a note or the like is written on the surface of the paper sheet K with the writing implement 10 such as a pen, the writing pressure exerted by a tip 10a such as a pen tip is transmitted through the paper sheet K to the over cladding layer 3, so that the optical waveguide W is pressed. In part of the optical waveguide W which is pressed with the tip 10a such as a pen tip, the cores 2 are hence bent along the tip 10a such as a pen tip so as to sink in the under cladding layer 1. Light leakage (scattering) from the bent part of the cores 2 occurs. Thus, the level of light received by the light-receiving element 5 is decreased in the cores 2 pressed with the tip 10a such as a pen tip. The position (coordinates) of the tip 10a such as a pen tip is detected based on the decrease in the level of received light.

As described above, the over cladding layer 3 has a thickness in the range of 1 to 100 µm and an elasticity modulus in the range of 0.1 MPa to 10 GPa. Thus, a portion (over cladding layer 3) above the cores 2 is thin while having a proper elasticity modulus. This allows the cores 2 to be bent sharply (to have a bent part with a small radius of curvature) even when the writing pressure is low. Further, the cores 2 have a thickness in the range of 10 to 100 µm and an elasticity modulus in the range of 1 to 10 GPa, as described above. Thus, the cores 2 are thick while having a proper elasticity modulus. This provides a large angle of light reflection from the bent part of the cores 2. A large amount of light leaks (scatters) from the cores 2 because of the aforementioned sharp bend of the cores 2 and the large angle of light reflection from the bent part of the cores 2 in combination. That is, the position (coordinates) pressed with the tip 10a such as a pen tip is precisely detected even when the writing pressure is low.

During the input to the paper sheet K, part of the optical waveguide W pressed with the tip 10a of the writing implement 10, with the paper sheet K therebetween, is deformed in the aforementioned manner to give a good touch when a user is writing.

When the aforementioned pressing with the tip 10a of the writing implement 10 is released (writing with the writing implement 10 is completed), the under cladding layer 1, the cores 2 and the over cladding layer 3 return to their original states (with reference to FIG. 1B) because of their restoring forces. It is preferable that the sinking depth D of the cores 2 into the under cladding layer 1 is a maximum of 2000 µm. When the sinking depth D exceeds 2000 µm, there are dangers that the under cladding layer 1, the cores 2 and the over cladding layer 3 do not return to their original states and that cracking occurs in the optical waveguide W.

The electronic underlay further includes a CPU (central processing unit) (not shown) for controlling the electronic underlay. In the CPU is incorporated a program for specifying the movement locus of the tip 10a such as a pen tip, based on the decrease in the level of light received by the light-receiving element 5. That is, the electronic underlay serves as a position sensor for sensing the position of the tip (such as a pen tip) 10a of the writing implement (such as a pen) 10 during the writing of a note or the like on the surface of the paper sheet K. Data representing the movement locus of the tip 10a of the writing implement 10, for example, is stored as electronic data in a storage means such as a memory.

Information such as a note stored in the storage means may be reproduced (displayed) using a reproducing terminal (such as a personal computer, a smartphone, and a tablet-type device), and may be further stored in the aforementioned reproducing terminal. In this case, the reproducing terminal and the electronic underlay are connected to each other with a connecting cable such as a micro USB cable, for example. The information such as a note is stored in a general-purpose file format such as PDF, for example, in the memory of the storage means.

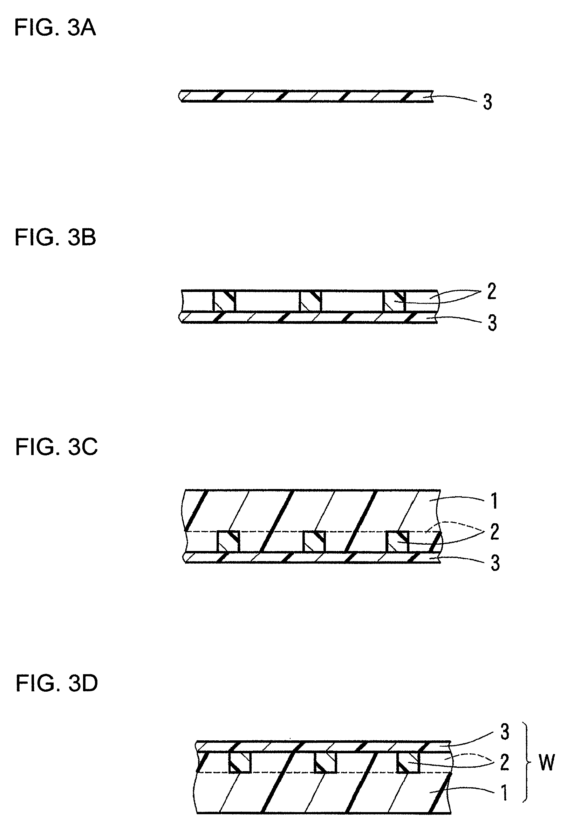

Next, a method of manufacturing the optical waveguide W will be described. Examples of the materials for the formation of the under cladding layer 1, the cores 2, and the over cladding layer 3 which constitute the optical waveguide W include photosensitive resins and thermosetting resins. The optical waveguide W may be produced by a manufacturing method depending on the materials. Specifically, as shown in FIG. 3A, the over cladding layer (second cladding layer) 3 is initially formed to have a sheet form with a uniform thickness. Next, as shown in FIG. 3B, the cores 2 in a protruding shape are formed in a predetermined pattern on the upper surface of the over cladding layer 3. Next, as shown in FIG. 3C, the under cladding layer (first cladding layer) 1 is formed on the upper surface of the over cladding layer 3 so as to cover the cores 2. Then, as shown in FIG. 3D, the resultant structure is turned upside down so that the under cladding layer 1 is positioned on the bottom side and the over cladding layer 3 is positioned on the top side. In this manner, the optical waveguide W is provided.

The cores 2 have a refractive index higher than the refractive indices of the under cladding layer 1 and the over cladding layer 3. The adjustment of the elasticity moduli and the refractive indices may be made, for example, by adjusting the selection of the types of the materials for the formation of the cores 2, the under cladding layer 1 and the over cladding layer 3, and the composition ratio thereof.

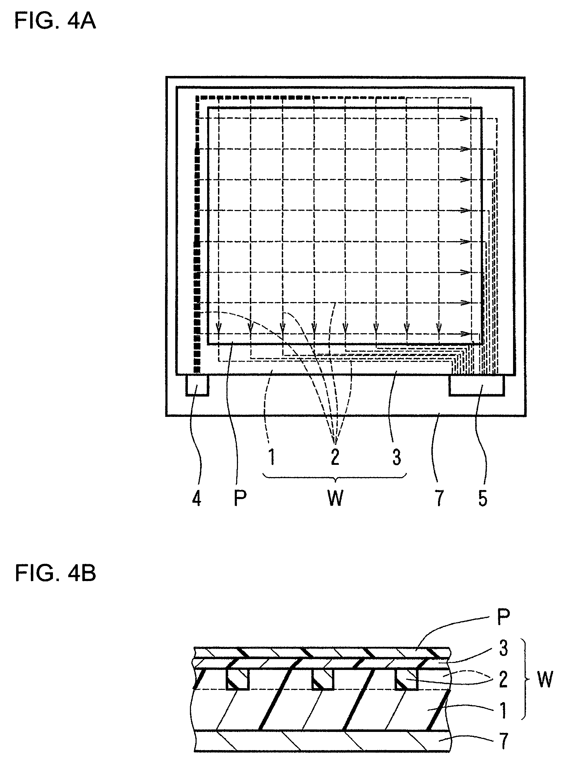

FIG. 4A is a plan view schematically showing another embodiment of the electronic underlay according to the present invention, and FIG. 4B is a sectional view, on an enlarged scale, of a middle portion of the electronic underlay. The electronic underlay according to this embodiment further includes a protective layer P made of resin and the like on the surface of the over cladding layer (second cladding layer) 3 in the aforementioned embodiment shown in FIGS. 1A and 1B. In this embodiment, the protective layer P has a surface serving as a surface for placement of the paper sheet K thereon. A laminate comprised of the over cladding layer 3 and the protective layer P has a thickness in the range of 1 to 100 µm and an elasticity modulus in the range of 0.1 MPa to 10 GPa. When an adhesive layer is present between the over cladding layer 3 and the protective layer P, the laminate including the adhesive layer has the thickness in the aforementioned range and the elasticity modulus in the aforementioned range. The remaining parts of this embodiment are similar to those of the aforementioned embodiment shown in FIGS. 1A and 1B. Like reference numerals and characters are used in this embodiment to designate parts similar to those of the aforementioned embodiment shown in FIGS. 1A and 1B.

In this embodiment, a portion (the laminate comprised of the over cladding layer 3 and the protective layer P) above the cores 2 is thin while having a proper elasticity modulus, as in the aforementioned embodiment shown in FIGS. 1A and 1B. This allows the cores 2 to be bent sharply (to have a bent part with a small radius of curvature) even when the writing pressure is low. Thus, a large amount of light leaks (scatters) from the cores 2. That is, the position (coordinates) pressed with the tip 10a such as a pen tip is precisely detected even when the writing pressure is low. In addition, the protective layer P protects the thin over cladding layer 3.

Examples of the material for the formation of the protective layer P include: resins such as PET (polyethylene terephthalate), PI (polyimide), and PEN (polyethylene naphthalate); rubbers such as silicone rubber and acrylic rubber; and metals such as stainless steel and aluminum. The thickness of the protective layer P may fall within the range of the thickness of the laminate, and is in the range of greater than 0 µm to less than 99 µm.

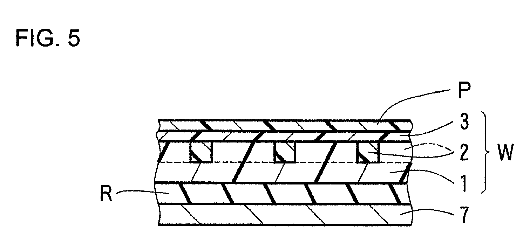

In each of the aforementioned embodiments, as shown in FIG. 5 (showing a configuration in which the protective layer P is formed), an elastic layer R such as a rubber layer may be provided on the back surface of the under cladding layer 1 (between the under cladding layer 1 and the rigid plate 7). In this case, for example, the under cladding layer 1 has a thickness in the range of 1 to 200 µm and an elasticity modulus in the range of 0.1 MPa to 10 GPa, and the elastic layer R has a thickness in the range of 20 to 20000 µm and an elasticity modulus in the range of 0.1 MPa to 1 GPa. When the restoring forces of the under cladding layer 1, the cores 2 and the over cladding layer 3 are weakened or when the under cladding layer 1, the cores 2 and the over cladding layer 3 are originally made of materials having weak restoring forces, the elastic force of the elastic layer R may be used to assist the weak restoring forces, thereby allowing the under cladding layer 1, the cores 2 and the over cladding layer 3 to return to their original states after the pressing with the tip 10a of the writing implement 10 is released.

In each of the aforementioned embodiments, the rigid plate 7 is provided to support the optical waveguide W. However, the rigid plate 7 need not be provided. In such a case, the input operation is performed, with the optical waveguide W of the electronic underlay placed on a hard flat base such as a table, for example.

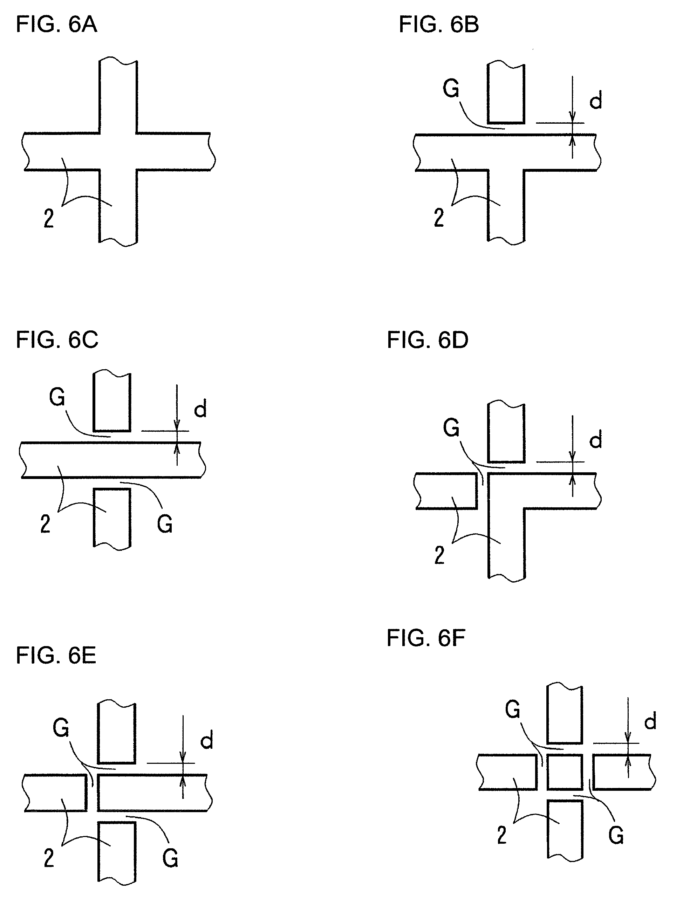

Each intersection of the linear cores 2 in the lattice form is generally configured to be continuous in all of the four intersecting directions as shown in enlarged plan view in FIG. 6A in the aforementioned embodiments, but may be of other configurations. For example, each intersection may be separated by a gap G to become discontinuous only in one of the intersecting directions, as shown in FIG. 6B. The gap G is made of the material for the formation of the under cladding layer 1 or the over cladding layer 3. The gap G has a width d greater than 0 (zero) (it is only necessary that the gap G is formed) and generally not greater than 20 µm. Likewise, as shown in FIGS. 6C and 6D, each intersection may be discontinuous in two intersecting directions (in two opposed directions in FIG. 6C, and in two adjacent directions in FIG. 6D). Alternatively, each intersection may be discontinuous in three intersecting directions, as shown in FIG. 6E. Also, each intersection may be discontinuous in all of the four intersecting directions, as shown in FIG. 6F. Further, the cores 2 may be in a lattice form including two or more types of intersections shown in FIGS. 6A to 6F. The term "lattice form" formed by the linear cores 2 as used in the present invention shall be meant to include a lattice form in which part or all of the intersections are formed in the aforementioned manner.

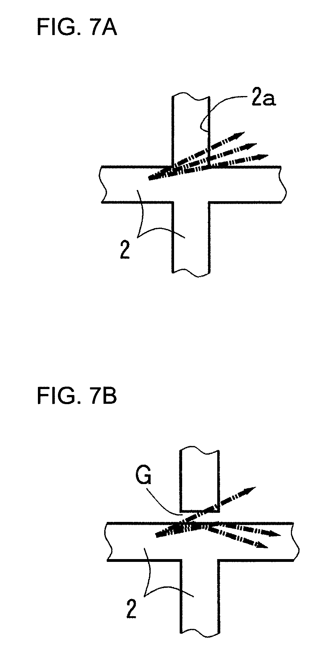

In particular, intersections which are discontinuous in at least one intersecting direction as shown in FIGS. 6B to 6F are capable of reducing intersection losses of light. At an intersection which is continuous in all of the four intersecting directions as shown in FIG. 7A, attention will be given on one intersecting direction (upward direction as seen in FIG. 7A). Then, part of light incident on the intersection reaches a wall surface 2a of a first core 2 perpendicular to a second core 2 through which the light travels, and is transmitted through the first core 2 (with reference to dash-double-dot arrows in FIG. 7A) because of the large angle of reflection from the wall surface. Such light transmission occurs also in the opposite intersecting direction (downward direction as seen in FIG. 7A). As shown in FIG. 7B, on the other hand, when an intersection is made discontinuous by the gap G in one intersecting direction (upward direction as seen in FIG. 7B), an interface between the gap G and a core 2 is formed. Then, part of light transmitted through the core 2 with reference to FIG. 7A is not transmitted through the core 2 but is reflected from the interface to continue traveling through the core 2 (with reference to dash-double-dot arrows in FIG. 7B) because of the smaller angle of reflection at the interface. Based on these facts, the reduction in intersection losses of light is achieved by making the intersection discontinuous in at least one intersecting direction as mentioned above. As a result, the sensitivity for detecting of the pressed position with a pen tip and the like is increased.

Next, inventive examples of the present invention will be described in conjunction with comparative examples. It should be noted that the present invention is not limited to the inventive examples.

### EXAMPLES

### [Material for Formation of Over Cladding Layer]

Component a: epoxy resin (EPOGOSEY PT available from Yokkaichi Chemical Company Limited)
Component b: epoxy resin (EHPE3150 available from Daicel Corporation)
Component c: photo-acid generator (CPI-200K available from San-Apro Ltd.)

A material for the formation of an over cladding layer was prepared by mixing these components a to c together.

### [Material for Formation of Cores]

Component d: epoxy resin (EHPE3150 available from Daicel Corporation)
Component e: epoxy resin (YDCN-700-10 available from Nippon Steel & Sumikin Chemical Co., Ltd.)
Component f: photo-acid generator (SP170 available from ADEKA Corporation)
Component g: ethyl lactate (a solvent available from Wako Pure Chemical Industries, Ltd.)

A material for the formation of cores was prepared by mixing these components d to g together.

### [Material for Formation of Under Cladding Layer]

Component h: epoxy resin (EPOGOSEY PT available from Yokkaichi Chemical Company Limited)
Component i: epoxy resin (JER1007 available from Mitsubishi Chemical Corporation)
Component j: photo-acid generator (CPI-200K available from San-Apro Ltd.)
Component k: ethyl lactate (a solvent available from Wako Pure Chemical Industries, Ltd.)

A material for the formation of an under cladding layer was prepared by mixing these components h to k together.

### [Production of Optical Waveguide]

An optical waveguide was produced in a manner to be described below. For the production, the values listed in TABLES 1 to 4 below were used for the thicknesses and elasticity moduli of the over cladding layer and other parts constituting the optical waveguide. The adjustment of the elasticity moduli was made by adjusting the contents of the components a to c, the components d and e, and the components h to j. A viscoelasticity measuring device (RSA3 available from TA instruments Japan Inc.) was used for the measurement of the elasticity moduli.

In Inventive Examples 1 to 9 and Comparative Examples 1 to 9, the over cladding layer was formed on a surface of a base material made of glass by a spin coating method with the use of the aforementioned material for the formation of the over cladding layer. In Inventive Examples 10 to 18 and Comparative Examples 10 to 18 each including a protective layer, a sheet made of PET (B100 available from Mitsubishi Plastics, Inc.) serving as the protective layer was placed on a surface of a base material made of glass, and the over cladding layer was formed on a surface of the sheet made of PET by a spin coating method with the use of the aforementioned material for the formation of the over cladding layer.

Next, the cores in a protruding shape were formed in a linear pattern on the upper surface of the over cladding layer by a photolithographic method with the use of the aforementioned material for the formation of the cores.

Next, the under cladding layer was formed on the upper surface of the over cladding layer by a spin coating method with the use of the aforementioned material for the formation of the under cladding layer so as to cover the cores.

Then, a rigid plate made of ABS resin with a double-sided adhesive tape affixed to one surface thereof was prepared. Next, the other adhesive surface of the double-sided adhesive tape was affixed to a surface of the under cladding layer. In that state, the over cladding layer was stripped from the base material made of glass in Inventive Examples 1 to 9 and Comparative Examples 1 to 9, and the sheet made of PET (protective layer) was stripped from the base material made of glass in Inventive Examples 10 to 18 and Comparative Examples 10 to 18 each including the protective layer. In this manner, the optical waveguide was produced on the one surface of the rigid plate made of ABS resin, with the double-sided adhesive tape therebetween.

### [Production of Electronic Underlay]

A light-emitting element (XH85-S0603-2s available from Optowell Co., Ltd.) was connected to one end surface of the cores of the aforementioned optical waveguide, and a light-receiving element (sl0226 available from Hamamatsu Photonics K.K.) was connected to the other end surface of the cores thereof. In this manner, an electronic underlay was produced.

### [Evaluation of Electronic Underlay]

A paper sheet having a thickness of 85 µm was placed on a surface of the electronic underlay (a surface of the over cladding layer or a surface of the protective layer). A tip (with a tip diameter of 0.7 mm) of a ballpoint pen was used to apply a load of 0.735 N corresponding to a low writing pressure (a load corresponding to an average human writing pressure is 1.47 N) to a surface of the paper sheet. The results were listed in TABLES 1 to 4 below in which an electronic underlay that precisely detected the pressing with the tip of the ballpoint pen (that showed a sufficiently decreased level of light received by the light-receiving element) was evaluated as being acceptable and indicated by an open circle, and an electronic underlay that did not precisely sense the pressing was evaluated as being unacceptable and indicated by a cross.

**[TABLE 1]**

| | | Inventive Examples | | | | | | | | |
|---|---|---|---|---|---|---|---|---|---|---|
| | | 1 | 2 | 3 | 4 | 5 | 6 | 7 | 8 | 9 |
| Over cladding layer | Thickness (µm) | 1 | 50 | 100 | 1 | 50 | 100 | 1 | 50 | 100 |
| | Elasticity modulus (Pa) | 0.1M | 5 G | 10 G | 0.1 M | 5 G | 10 G | 0.1M | 5 G | 10 G |
| Cores | Thickness (µm) | 10 | | | 50 | | | 100 | | |
| | Elasticity modulus (Pa) | 1 G | | | 5 G | | | 10 G | | |
| Under cladding layer | Thickness (µm) | 20 | | | 1000 | | | 2000 | | |
| | Elasticity modulus (Pa) | 0.1 M | | | 0.5 G | | | 1 G | | |
| Evaluation | | ○ | ○ | ○ | ○ | ○ | ○ | ○ | ○ | ○ |

**[TABLE 2]**

| | | Inventive Examples | | | | | | | | |
|---|---|---|---|---|---|---|---|---|---|---|
| | | 10 | 11 | 12 | 13 | 14 | 15 | 16 | 17 | 18 |
| Protective layer | Thickness (µm) | 0.3 | 39.8 | 69.8 | 0.3 | 39.8 | 69.8 | 0.3 | 39.8 | 69.8 |
| Over cladding layer | ThickThickness (µm) | 0.7 | 10.2 | 30.2 | 0.7 | 10.2 | 30.2 | 0.7 | 10.2 | 30.2 |
| Laminate | Thickness (µm) | 1 | 50 | 100 | 1 | 50 | 100 | 1 | 50 | 100 |
| | Elasticity modulus (Pa) | 0.1 M | 5 G | 10 G | 0.1M | 5 G | 10 G | 0.1 M | 5 G | 10 G |
| Cores | Thickness (µm) | 10 | | | 50 | | | 100 | | |
| | Elasticity modulus (Pa) | 1 G | | | 5 G | | | 10 G | | |
| Under cladding layer | Thickness (µm) | 20 | | | 1000 | | | 2000 | | |
| | Elasticity modulus (Pa) | 0.1 M | | | 0.5 G | | | 1 G | | |
| Evaluation | | ○ | ○ | ○ | ○ | ○ | ○ | ○ | ○ | ○ |

**[TABLE 3]**

| | | Comparative Examples | | | | | | | | |
|---|---|---|---|---|---|---|---|---|---|---|
| | | 1 | 2 | 3 | 4 | 5 | 6 | 7 | 8 | 9 |
| Over cladding layer | Thickness (µm) | 110 | | | 1 | 50 | 100 | 1 | 50 | 100 |
| | Elasticity modulus (Pa) | 11 G | | | 0.1 M | 5 G | 10 G | 0.1M | 5 G | 10 G |
| Cores | Thickness (µm) | 10 | 50 | 100 | 5 | | | 110 | | |
| | Elasticity modulus (Pa) | 1 G | 5 G | 10 G | 0.5 G | | | 11 G | | |
| Under cladding layer | Thickness (µm) | 20 | 1000 | 2000 | 20 | | | 2000 | | |
| | Elasticity modulus (Pa) | 0.1M | 0.5 G | 1 G | 0.1 M | | | 1 G | | |
| Evaluation | | × | × | × | × | × | × | × | × | × |

**[TABLE 4]**

| | | Comparative Examples | | | | | | | | |
|---|---|---|---|---|---|---|---|---|---|---|
| | | 10 | 11 | 12 | 13 | 14 | 15 | 16 | 17 | 18 |
| Protective layer | Thickness (µm) | 69.8 | | | 0.3 | 39.8 | 69.8 | 0.3 | 39.8 | 69.8 |
| Over cladding layer | Thickness (µm) | 40.2 | | | 0.7 | 10.2 | 30.2 | 0.7 | 10.2 | 30.2 |
| Laminate | Thickness (µm) | 110 | | | 1 | 50 | 100 | 1 | 50 | 100 |
| | Elasticity modulus (Pa) | 11 G | | | 0.1 M | 5 G | 10 G | 0.1M | 5 G | 10 G |
| Cores | Thickness (µm) | 10 | 50 | 100 | 5 | | | 110 | | |
| | Elasticity modulus (Pa) | 1 G | 5 G | 10 G | 0.5 G | | | 11 G | | |
| Under cladding layer | Thickness (µm) | 20 | 1000 | 2000 | 20 | | | 2000 | | |
| | Elasticity modulus (Pa) | 0.1 M | 0.5 G | 1 G | 0.1 M | | | 1 G | | |
| Evaluation | | × | × | × | × | × | × | × | × | × |

The results of TABLES 1 to 4 show that the electronic underlay in each of Inventive Examples 1 to 18 can precisely detect the position pressed with the tip of the ballpoint pen even when the writing pressure is low. The results of TABLES 1 to 4 also show that the electronic underlay in each of Comparative Examples 1 to 18 cannot precisely detect the position pressed with the tip of the ballpoint pen when the writing pressure is low. It is found that such a difference in the results depends on the thickness and elasticity modulus of a portion above the cores or the cores.

Also, a rubber layer was provided between the under cladding layer and the rigid plate made of ABS resin in each of Inventive Examples 1 to 18. The under cladding layer had a thickness in the range of 1 to 200 µm and an elasticity modulus in the range of 0.1 MPa to 10 GPa, and the rubber layer had a thickness in the range of 20 to 20000 µm and an elasticity modulus in the range of 0.1 MPa to 1 GPa. Then, the electronic underlay was evaluated in substantially the same manner as in each of Inventive Examples 1 to 18. In such a case, results showing tendencies similar to those in Inventive Examples 1 to 18 were produced.

Although specific forms in the present invention have been described in the aforementioned examples, the aforementioned examples should be considered as merely illustrative and not restrictive. It is contemplated that various modifications evident to those skilled in the art could be made without departing from the scope of the present invention.

The electronic underlay according to the present invention is applicable to precisely sensing a position pressed with the tip of a writing implement even at a low writing pressure when the electronic underlay is laid under a paper sheet and a note or the like is written on the paper sheet with the writing implement.

### REFERENCE SIGNS LIST

- W: Optical waveguide
- 1: Under cladding layer
- 2: Cores
- 3: Over cladding layer
- 4: Light-emitting element
- 5: Light-receiving element

## Claims

1. An electronic underlay comprising:
an optical waveguide in a sheet form including a first cladding layer in a sheet form, a second cladding layer in a sheet form, and a plurality of linear cores arranged in a lattice form, the cores being held between the first and second cladding layers;
a light-emitting element connected to one end surface of the cores of the optical waveguide; and
a light-receiving element connected to the other end surface of the cores,
wherein the optical waveguide is capable of being used under a paper sheet on which writing is performed with a writing implement,
wherein the second cladding layer of the optical waveguide has a surface serving as a surface for placement of the paper sheet thereon,
wherein the optical waveguide is configured such that the cores having a thickness in the range of 10 to 100 µm and an elasticity modulus in the range of 1 to 10 GPa are buried in the first cladding layer so that a top surface of the cores is flush with a surface of the first cladding layer, and such that the second cladding layer having a thickness in the range of 1 to 100 µm and an elasticity modulus in the range of 0.1 MPa to 10 GPa is formed so as to cover the surface of the first cladding layer and the top surface of the cores,
wherein light emitted from the light-emitting element passes through the cores of the optical waveguide and is received by the light-receiving element,
wherein a surface part of the paper sheet corresponding to part of the linear cores arranged in the lattice form of the optical waveguide serves as an input region, and
wherein a movement locus of the tip of the writing implement in the input region is specified, based on the amount of light propagating in the cores which is changed by the movement of the tip of the writing implement.

2. The electronic underlay according to claim 1, further comprising
a protective layer provided on a surface of the second cladding layer and having a surface serving as the surface for placement of the paper sheet thereon,
wherein a laminate comprised of the second cladding layer and the protective layer has a thickness in the range of 1 to 100 µm and an elasticity modulus in the range of 0.1 MPa to 10 GPa.
